# EUROPÄISCHE PATENTANMELDUNG

(11) **EP 3 318 356 A1**
(43) Veröffentlichungstag der Anmeldung: **09.05.2018**
(21) Anmeldenummer: 17198821.5
(22) Anmeldetag: 27.10.2017
(51) Int. Cl.: B23D 21/10, B26D 3/16, B26B 17/00, B25H 7/00

(54) **ROHRSCHERE**

(30) Priorität: 04.11.2016 DE 202016106176 U
(71) Anmelder: REHAU AG + Co, 95111 Rehau (DE)
(72) Erfinder: Baur-Dürr, Stephan, 91085 Weisendorf (DE); Koch, Klaus Paul, 90513 Zirndorf (DE); Kröber, Carsten, 90768 Fürth (DE)

(57) **Zusammenfassung**

Die vorliegende Erfindung bezieht sich auf eine Rohrschere (1) zum Durchtrennen eines Kunststoffrohres oder Metall-Kunststoff-Verbundrohres mit zwei zueinander um eine gemeinsame Drehachse schwenkbaren Hebeln (3, 3'), wobei der eine Hebel (3) eine als Trennelement wirkende Schneidbacke (5) trägt und der andere Hebel (3') einen Aufnahmebereich (9) zur Aufnahme des zu durchtrennenden Kunststoffrohres oder Metall-Kunststoff-Verbundrohres trägt, wobei der Aufnahmebereich (9) einen Stützbereich (10) zum aufliegenden Stützen des zu durchtrennenden Kunststoffrohres oder Metall-Kunststoff-Verbundrohres während des Durchtrennens umfasst.

## Beschreibung

Die vorliegende Erfindung betrifft eine Rohrschere zum Durchtrennen eines Kunststoffrohres oder Metall-Kunststoff-Verbundrohres mit zwei zueinander um eine gemeinsame Drehachse schwenkbaren Hebeln, wobei der eine Hebel eine als Trennelement wirkende-Schneidbacke trägt und der andere Handhebel einen Aufnahmebereich zur Aufnahme des zu durchtrennenden Kunststoffrohres oder Metall-Kunststoff-Verbundrohres trägt.

Derartige von Hand zu betätigende Rohrscheren sind im Stand der Technik bekannt. Bei der Verwendung derartiger Rohrscheren wird zunächst das aus der Schneidbacke und dem Aufnahmebereich gebildete Scherenmaul geöffnet. Anschließend wird das zu durchtrennende Kunststoffrohr oder Metall-Kunststoff-Verbundrohr in der gewünschten Position des Rohres in den Aufnahmebereich der Rohrschere eingelegt und abschließend wird das Kunststoffrohr oder Metall-Kunststoff-Verbundrohr durch Betätigen der Schere durchtrennt. Nachteilig an derartigen Rohrscheren wird gesehen, dass das zu durchtrennende Kunststoffrohr oder Metall-Kunststoff-Verbundrohr im Scherenmaul leicht seine Position und/oder Ausrichtung zur Schneidbacke verändern kann. Insbesondere eine Änderung der Ausrichtung des zu durchtrennenden Kunststoffrohres oder Metall-Kunststoff-Verbundrohres zur Schneidbacke kann zu einem Durchtrennen des Kunststoffrohres oder Metall-Kunststoff-Verbundrohres in einer Richtung führen, die nicht senkrecht zur Rohrachse liegt. Dies kann zu Undichtigkeiten bei Rohrverbindungen nach sich ziehen, die einen derartigen "schräg" geschnittenen Rohrabschnitt umfassen.

An dieser Stelle setzt die vorliegende Erfindung ein, der die Aufgabe zugrunde liegt, eine Rohrschere zum Durchtrennen eines Kunststoffrohres oder Metall-Kunststoff-Verbundrohres zur Verfügung zu stellen, die die Nachteile des Stands der Technik überwindet. Insbesondere soll die erfindungsgemäße Rohrschere ein gleichmäßiges Durchtrennen des Kunststoffrohres oder Metall-Kunststoff-Verbundrohres senkrecht zur Rohrachse gewährleisten. Darüber hinaus soll die erfindungsgemäße Rohrschere einfach aufgebaut, kostengünstig und einfach handhabbar sein.

Diese und andere Aufgaben werden durch eine Rohrschere zum Durchtrennen eines Kunststoffrohres oder Metall-Kunststoff-Verbundrohres mit den Merkmalen des Anspruches 1 gelöst. Vorteilhafte Ausführungsformen der erfindungsgemäßen Rohrschere sind in den abhängigen Ansprüchen beschrieben.

Gemäß der vorliegenden Erfindung wurde erkannt, dass die Position des zu durchtrennenden Kunststoffrohres oder Metall-Kunststoff-Verbundrohres im Scherenmaul in einfacher Weise bereits dadurch stabilisiert werden kann, dass das Werkzeug zu durchtrennende Rohr in seiner Position im Werkzeug im Bereich des Scherenmauls abstützt. Erfindungsgemäß verfügt die Rohrschere dazu im Aufnahmebereich über einen Stützbereich. Auf dem Stützbereich liegt das zu durchtrennende Rohr während des Schneidens mit der erfindungsgemäßen Rohrschere auf, so dass die Gefahr eines Verrutschens des zu durchtrennenden Rohres beim Durchtrennen reduziert ist. Dadurch ist das Problem des Abschneidens des Rohrs in einer Richtung, die nicht senkrecht zur Rohrachse ist, und damit des Auftretens von Undichtigkeiten bei Rohrverbindungen, die einen mit der erfindungsgemäßen Rohrschere hergestellten Rohrabschnitt umfassen, signifikant verringert. Dabei bleibt die erfindungsgemäße Rohrschere einfach aufgebaut und kostengünstig.

Dementsprechend liegt die vorliegende Erfindung in der Bereitstellung einer Rohrschere zum Durchtrennen eines Kunststoffrohres oder Metall-Kunststoff-Verbundrohres mit zwei zueinander um eine gemeinsame Drehachse schwenkbaren Hebeln, wobei der eine Handhebel eine als Trennelement wirkende Schneidbacke trägt und der andere Hebel einen Aufnahmebereich zur Aufnahme des zu durchtrennenden Kunststoffrohres oder Metall-Kunststoff-Verbundrohres trägt, wobei sich die Rohrschere erfindungsgemäß dadurch auszeichnet, dass der Aufnahmebereich einen Stützbereich zum aufliegenden Stützen des zu durchtrennenden Kunststoffrohres oder Metall-Kunststoff-Verbundrohres während des Durchtrennens umfasst.

Hinsichtlich der erfindungsgemäßen Rohrschere kann es vorteilhaft sein, wenn der Stützbereich mindestens zwei Abschnitte umfasst, von denen im geschlossenen Zustand der Rohrschere jeweils mindestens einer an beiden Seiten der Schneidbacke der erfindungsgemäßen Rohrschere angeordnet ist. Stützende Abschnitte auf beiden Seiten der Schneidbacke erhöhen die Stützwirkung weiter und verringern so die Gefahr des Auftretens von Undichtigkeiten bei Rohrverbindungen, die einen mit der erfindungsgemäßen Rohrschere hergestellten Rohrabschnitt umfassen, weiter.

Zusätzlich oder alternativ dazu kann es auch vorteilhaft sein, wenn der Stützbereich oder Abschnitte des Stützbereichs im Querschnitt schalenförmig ausgebildet ist. Ist der Stützbereich zumindest teilweise schalenförmig ausgebildet, trägt auch diese Form dazu bei, eine ungewollte Positionsänderung des zu durchtrennenden Kunststoffrohres oder Metall-Kunststoff-Verbundrohres während des Durchtrennens zu verhindern. Darüber hinaus lässt sich auf diese Weise die erfindungsgemäße Rohrschere auf den Außendurchmesser des zu durchtrennenden Kunststoffrohres oder Metall-Kunststoff-Verbundrohres anpassen.

Es kann sich auch als nützlich erweisen, wenn die Länge des Stützbereichs den Durchmesser des zu durchtrennenden Kunststoffrohres oder Metall-Kunststoff-Verbundrohres übersteigt. Wie hierin verwendet ist unter "Länge des Stützbereichs" der Abstand zwischen dem Trennelement und dem davon entfernten Rand des Stützbereichs im geschlossenen Zustand der Rohrschere zu verstehen. Eine derartige Länge der Rohrschere hat sich in der Praxis als ausreichend dazu erweisen, die Gefahr eines Verrutschens des zu durchtrennenden Rohres beim Durchtrennen wesentlich zu reduzieren und dadurch das Problem des Abschneidens des Rohrs in einer Richtung, die nicht senkrecht zur Rohrachse ist, weitgehend auszuschließen.

Es kann sich auch als hilfreich herausstellen, wenn im Stützbereich ein Markierungselement zur Erzeugung einer Markierung auf dem zu durchtrennenden Kunststoffrohr oder Metall-Kunststoff-Verbundrohr beim Durchtrennen angeordnet ist. In diesem Zusammenhang kann es von besonderem Nutzen sein, wenn das Markierungselement im geschlossenen Zustand der Rohrschere von der Schneidbacke beabstandet angeordnet ist. Auf diese Weise bleibt ein sauberes Ablängen des zu durchtrennenden Kunststoffrohres oder Metall-Kunststoff-Verbundrohres gewährleistet. Dabei kann es besonders bevorzugt sein, wenn der Abstand des Markierungselements von der Schneidbacke im geschlossenen Zustand der Rohrschere im Wesentlichen der Länge des Abschnitts des zu durchtrennenden Kunststoffrohres oder Metall-Kunststoff-Verbundrohres entspricht, mit dem das zu durchtrennende Kunststoffrohr oder Metall-Kunststoff-Verbundrohr in ein Verbindungselement oder Anschlusselement eingeführt werden soll. Dadurch entsteht bei Durchtrennen des Kunststoffrohres oder Metall-Kunststoff-Verbundrohres auf dem abgetrennten Rohrabschnitt eine Tiefenmarkierung. Führt der Handwerker den Abschnitt nun zum Erzeugen einer Rohrverbindung oder eines Rohranschlusses in einen entsprechenden Fitting ein, erkennt der Handwerker nun anhand der Tiefenmarkierung, wie weit er den abgelängten Rohrabschnitt in den Fitting einzuführen hat, um eine dichte Rohrverbindung erzeugen zu können. Zusätzlich oder alternativ dazu kann es sich als günstig erweisen, wenn die durch das Markierungselement auf dem Kunststoffrohr oder Metall-Kunststoff-Verbundrohr beim Durchtrennen erzeugte Markierung einen Hinweis auf den Hersteller der Rohrschere darstellt. Dadurch ist gewährleistet, dass der Systemhersteller, von dem sowohl das Rohr als auch die Rohrschere bezogen worden sind, überprüfen kann, ob von ihm zugelassene und/oder über ihn bezogene Artikel beim Herstellen einer Rohrverbindung eingesetzt wurden. Dies kann beim Auftreten eines Schadenfalls oder Garantiefalls von Bedeutung sein. Zusätzlich oder alternativ dazu als hilfreich herausstellen, wenn durch das Markierungselement auf dem Kunststoffrohr oder Metall-Kunststoff-Verbundrohr beim Durchtrennen erzeugte Markierung einen Hinweis auf den für die Rohrschere geeigneten Rohraußendurchmesser darstellt. Eine derartige Information kann beim Auftreten eines Schadenfalls oder Garantiefalls ebenso von Bedeutung sein. Darüber hinaus kann es hilfreich sein, wenn das Markierungselement erhaben auf der Oberfläche des Stützbereichs ausgebildet ist. Alternativ dazu kann das Markierungselement auch als Stempel ausgebildet sein, der beim Durchtrennen des Kunststoffrohrs oder Metall-Kunststoff-Verbundrohrs mit der erfindungsgemäßen Rohrschere einen entsprechenden Abdruck mit einer Farbe, einem Lack, einer Tinte oder dergleichen auf der Oberfläche des Rohrs hinterlässt.

Es kann auch hifreich sein, wenn der die Schneidbacke tragende Hebel der erfindungsgemäßen Rohrschere einen weiteren Stützbereich umfasst. Dadurch ist gewährleistet, dass ein durch die erfindungsgemäße Rohrschere abgetrennter Abschnitt des Kunststoffrohrs oder Metall-Kunststoff-Verbundrohrs unmittelbar nach dem Schneidvorgang aus der erfindungsgemäßen Rohrschere herausfällt. Auf diese Weise wird das Handling des abgetrennten Abschnitts für den Handwerker erleichtert. In diesem Zusammenhang kann es bevorzugt sein, wenn der weitere Stützbereich im Querschnitt zumindest abschnittsweise schalenförmig ausgebildet ist.

Die vorliegende Erfindung wird im Folgenden unter Bezugnahme auf bevorzugte Ausführungsformen der erfindungsgemäßen Rohrschere im Detail beschrieben, wobei die beigefügten Zeichnungen die Erfindung leichter verständlich machen sollen. Dabei versteht es sich, dass die dargestellten Ausführungsformen die vorliegende Erfindung exemplarisch veranschaulichen und nicht einschränken sollen. Es zeigen:
- Fig. 1: eine Rohrschere gemäß einer Ausführungsform der vorliegenden Erfindung im geöffneten Zustand in einer perspektivischen Ansicht; und
- Fig. 2: eine Rohrschere gemäß einer weiteren Ausführungsform der vorliegenden Erfindung im geschlossenen Zustand in einer perspektivischen Ansicht.

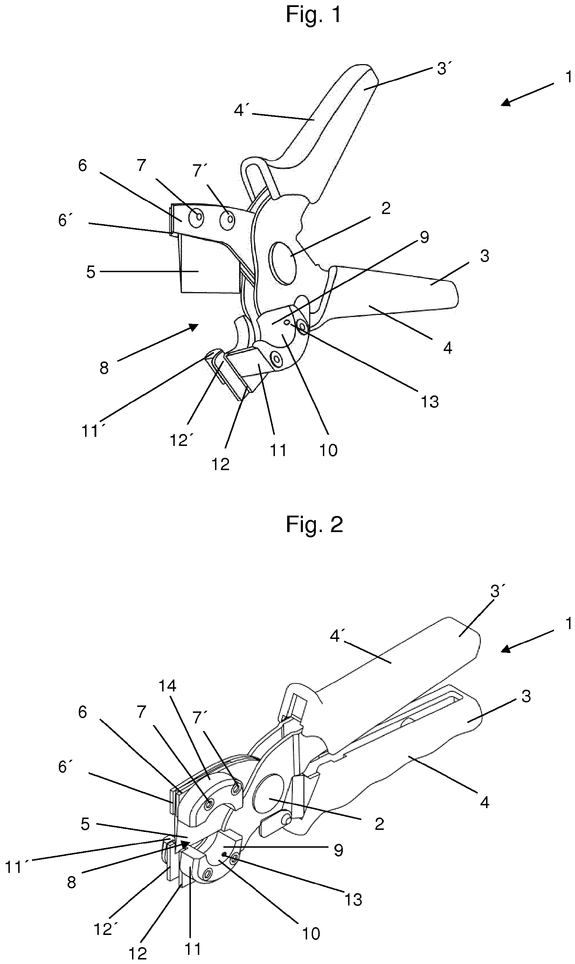

In Fig. 1 ist eine Ausführungsform einer Rohrschere 1 gemäß der vorliegenden Erfindung in einer perspektivischen Ansicht gezeigt. In der in Fig. 1 dargestellten Ausführungsform umfasst die erfindungsgemäße Rohrschere 1 zum Durchtrennen eines Kunststoffrohres oder Metall-Kunststoff-Verbundrohres mit zwei zueinander um eine gemeinsame, in der gezeigten Ausführungsform als Drehbolzen 2 realisierte Drehachse schwenkbaren Handhebeln 3, 3', die in der Darstellung gemäß Fig. 1 geöffnet sind und jeweils einen Handgriff 4, 4'umfassen. Zusätzlich weist der Hebel 3 eine als Trennelement fungierende Schneidbacke 5 auf. Die Schneidbacke 5 liegt zwischen zwei Blenden 6, 6', ist mittels Schrauben 7, 7' an den Blenden 6, 6' befestigt und liegt nur im Schneidebereich 8 frei. Der andere Hebel 3' umfasst einen Aufnahmebereich 9 zur Aufnahme des zu durchtrennenden Kunststoffrohres oder Metall-Kunststoff-Verbundrohres . Nach Einlegen des zu durchtrennenden Kunststoffrohres oder Metall-Kunststoff-Verbundrohres in den Aufnahmebereich 9 liegt das Rohr in einem Stützbereich 10 des Aufnahmebereichs 9 auf und wird durch diesen abgestützt. Auf dem Stützbereich 10 liegt das zu durchtrennende Rohr während des Schneidens mit der erfindungsgemäßen Rohrschere 1 auf. Dadurch ist das Risiko eines Verrutschens des zu durchtrennenden Rohres beim Durchtrennen mit der erfindungsgemäßen Rohrschere 1 verringert.

Der Stützbereich 10 weist in der in Fig. 1 gezeigten Ausführungsform der erfindungsgemäßen Rohrschere 1 zwei Abschnitte 11, 11' auf. Die Abschnitte 11, 11' sind an zwei voneinander beabstandeten Blenden 12, 12'angeordnet. Der Abstand zwischen den Blenden 12, 12' dient zur Aufnahme der Schneidbacke 5 beim Schließen der der erfindungsgemäßen Rohrschere. Dabei ist der Abschnitt 11 an der Blende 12 angeordnet, während der Abschnitt 11' an der anderen Blende 12'angeordnet ist. Im geschlossenen Zustand der erfindungsgemäßen Rohrschere 1 ist der Abschnitt 11 somit an einer Seite der Schneidbacke 5 angeordnet, während der andere Abschnitt 11' des Stützbereichs 10 an der gegenüber liegenden Seite der Schneidbacke 5 angeordnet ist. Die Anordnung der stützenden Abschnitte 11, 11' auf beiden Seiten der Schneidbacke 5 erhöhen deren Stützwirkung weiter und verringern so die Gefahr des Auftretens von Undichtigkeiten bei Rohrverbindungen, die einen mit der erfindungsgemäßen Rohrschere 1 hergestellten Rohrabschnitt umfassen, weiter. Beide Abschnitte 11, 11' des Stützbereichs 10 sind im Querschnitt schalenförmig ausgebildet ist. Die gesamte Länge des Stützbereichs 10, also die Stärke beider Abschnitte 11, 11' zusammen, ist größer als der Durchmesser des zu durchtrennenden Kunststoffrohres oder Metall-Kunststoff-Verbundrohres übersteigt.

Im Abschnitt 11 des Stützbereichs 10 weist erfindungsgemäße Rohrschere 1 ein Markierungselement 13, das von der Blende 12 beabstandet angeordnet ist. Das Markierungselement 13 ist als erhabener Punkt ausgeführt. Beim Ablängen eines Rohres mit der erfindungsgemäßen Rohrschere 1, also während des Schließens der erfindungsgemäßen Rohrschere 1 bei in den Aufnahmebereich 9 eingelegtem Rohr, erzeugt das Markierungselement 13 in der Außenoberfläche des Rohres einen der Geometrie des Markierungselements 13 entsprechenden Abdruck. Dieser Abdruck des Markierungselements 13 auf der Außenoberfläche des abgelängten Kunststoffrohres oder Metall-Kunststoff-Verbundrohres stellt für den Handwerker eine Tiefenmarkierung dar. Führt der Handwerker den Abschnitt nun zur Herstellung einer Rohrverbindung oder eines Rohranschlusses mit dem erzeugten Rohrabschnitt einen entsprechenden Fitting ein, erkennt der Handwerker nun anhand der Tiefenmarkierung, wie weit er den abgelängten Rohrabschnitt in den Fitting einzuführen hat, um eine dichte Rohrverbindung erzeugen zu können. Dabei kann das Markierungselement 13 auf der Außenoberfläche des Kunststoffrohrs oder Metall-Kunststoff-Verbundrohrs einen Hinweis auf den Hersteller der erfindungsgemäßen Rohrschere 1 erzeugen. Beispielsweise kann dies dadurch erfolgen, dass das Markierungselement 13 ein entsprechendes Firmenlogo oder einen entsprechenden Firmennamen in die Außenoberfläche des Kunststoffrohrs oder Metall-Kunststoff-Verbundrohrs eindrückt.

Fig. 2 ist eine weitere Ausführungsform der erfindungsgemäßen Rohrschere 1 zum Durchtrennen eines Kunststoffrohres oder Metall-Kunststoff-Verbundrohres umfasst in einer perspektivischen Ansicht im geschlossenen Zustand. Die erfindungsgemäße Rohrschere 1 gemäß der in Fig. 2 dargestellte Ausführungsform ist zu der in Fig. 1 dargestellten erfindungsgemäßen Rohrschere 1 weitgehend identisch. Zu Aufbau und Funktionsweise der erfindungsgemäßen Rohrschere 1 gemäß Fig. 2 soll daher auf die diesbezüglichen Ausführungen zu Fig. 1 hingewiesen werden, die für die erfindungsgemäße Rohrschere 1 gemäß Fig. 2 entsprechend gelten.

Die erfindungsgemäße Rohrschere 1 gemäß Fig. 2 weist zusätzlich lediglich einen weiteren Stützbereich 14 auf, der an dem die Schneidbacke 5 tragenden Hebel 3 der erfindungsgemäßen Rohrschere 1 mittels der Schrauben 7, 7' befestigt ist, die gleichzeitig auch die Schneidbacke 5 am Hebel 3 festlegen. Der weitere Stützbereich 14 verhindert, dass ein durch die erfindungsgemäße Rohrschere 1 gemäß Fig. 2 abgetrennter Abschnitt des Kunststoffrohrs oder Metall-Kunststoff-Verbundrohrs unmittelbar nach dem Schneidvorgang aus der erfindungsgemäßen Rohrschere herausfällt. Im Querschnitt ist der weitere Stützbereich 14 ebenfalls schalenförmig ausgebildet, wobei sein Krümmungsradius dem Krümmungsradius des Abschnitts 11 des Stützbereichs 10 entspricht.

Die vorliegende Erfindung wurde unter Bezugnahme auf die in den Figuren gezeigten Ausführungsformen der vorliegenden Erfindung im Detail beschrieben. Es versteht sich, dass die vorliegende Erfindung nicht auf die gezeigten Ausführungsformen beschränkt ist, sondern sich der Umfang der vorliegenden Erfindung aus den Ansprüchen ergibt.

## Patentansprüche

1. Rohrschere (1) zum Durchtrennen eines Kunststoffrohres oder Metall-Kunststoff-Verbundrohres mit zwei zueinander um eine gemeinsame Drehachse schwenkbaren Hebeln (3, 3'), wobei der eine Hebel (3) eine als Trennelement wirkende Schneidbacke (5) trägt und der andere Hebel (3') einen Aufnahmebereich (9) zur Aufnahme des zu durchtrennenden Kunststoffrohres oder Metall-Kunststoff-Verbundrohres trägt,
**dadurch gekennzeichnet, dass**
der Aufnahmebereich (9) einen Stützbereich (10) zum aufliegenden Stützen des zu durchtrennenden Kunststoffrohres oder Metall-Kunststoff-Verbundrohres während des Durchtrennens umfasst.

2. Rohrschere (1) gemäß Anspruch 1, **dadurch gekennzeichnet, dass** der Stützbereich (10) mindestens zwei Abschnitte (11, 11') umfasst, wobei im geschlossenen Zustand der Rohrschere (1) an beiden Seiten der Schneidbacke (5) jeweils mindestens einer der Abschnitte (11, 11') angeordnet ist.

3. Rohrschere (1) gemäß Anspruch 1 oder Anspruch 2, **dadurch gekennzeichnet, dass** der Stützbereich (10) oder Abschnitte (11, 11') des Stützbereichs (10) im Querschnitt schalenförmig ausgebildet ist.

4. Rohrschere (1) gemäß einem der Ansprüche 1 bis 3, **dadurch gekennzeichnet, dass** die Länge des Stützbereichs (10) den Durchmesser des zu durchtrennenden Kunststoffrohres oder Metall-Kunststoff-Verbundrohres übersteigt.

5. Rohrschere (1) gemäß einem der Ansprüche 1 bis 4, **dadurch gekennzeichnet, dass** im Stützbereich (10) ein Markierungselement (13) zur Erzeugung einer Markierung auf dem zu durchtrennenden Kunststoffrohr oder Metall-Kunststoff-Verbundrohr beim Durchtrennen angeordnet ist.

6. Rohrschere (1) gemäß Anspruch 5, **dadurch gekennzeichnet, dass** das Markierungselement (13) im geschlossenen Zustand der Rohrschere (1) von der Schneidbacke (5) beabstandet angeordnet ist.

7. Rohrschere (1) gemäß Anspruch 6, **dadurch gekennzeichnet, dass** der Abstand des Markierungselements (13) von der Schneidbacke im geschlossenen Zustand der Rohrschere (1) im Wesentlichen der Länge des Abschnitts des zu durchtrennenden Kunststoffrohres oder Metall-Kunststoff-Verbundrohres entspricht, mit dem das zu durchtrennende Kunststoffrohr oder Metall-Kunststoff-Verbundrohr in ein Verbindungselement oder Anschlusselement eingeführt werden soll.

8. Rohrschere (1) gemäß einem der Ansprüche 5 bis 7, **dadurch gekennzeichnet, dass** die durch das Markierungselement (13) auf dem Kunststoffrohr oder Metall-Kunststoff-Verbundrohr beim Durchtrennen erzeugte Markierung einen Hinweis auf den Hersteller der Rohrschere (1) darstellt.

9. Rohrschere (1) gemäß einem der Ansprüche 5 bis 8, **dadurch gekennzeichnet, dass** die durch das Markierungselement (13) auf dem Kunststoffrohr oder Metall-Kunststoff-Verbundrohr beim Durchtrennen erzeugte Markierung einen Hinweis auf den für die Rohrschere (1) geeigneten Rohraußendurchmesser darstellt.

10. Rohrschere (1) gemäß einem der Ansprüche 1 bis 9, **dadurch gekennzeichnet, dass** der die Schneidbacke (5) tragende Hebel (3) einen weiteren Stützbereich (14) umfasst.

11. Rohrschere (1) gemäß Anspruch 10, **dadurch gekennzeichnet, dass** der weitere Stützbereich (14) im Querschnitt zumindest abschnittsweise schalenförmig ausgebildet ist.
